# EUROPEAN PATENT SPECIFICATION

(11) **EP 0 928 702 B1**
(45) Date of publication and mention of the grant of the patent: **24.09.2003**
(21) Application number: 97830733.8
(22) Date of filing: 30.12.1997
(51) Int. Cl.: B60C 9/02, B60C 15/00, B60C 15/05

(54) **A tyre for vehicle wheels**
Luftreifen für Fahrzeugräder
Bandage pneumatique pour roues de véhicule

(43) Date of publication of application: 14.07.1999
(73) Proprietor: PIRELLI PNEUMATICI SOCIETA' PER AZIONI, 20126 Milano (IT)
(72) Inventor: Caretta, Renato, Gallarate (Varese) (IT); Marchini, Maurizio, 20038 Seregno, Milano (IT)
(74) Representative: Righetti, Giuseppe

(56) References cited:
- EP-A- 0 557 615
- EP-A- 0 582 196
- EP-A- 0 664 232
- FR-A- 384 231
- FR-A- 750 726
- FR-A- 1 256 432
- US-A- 2 966 933
- US-A- 3 431 962
- US-A- 3 935 894
- US-A- 4 126 720
- US-A- 4 248 287
- US-A- 4 387 759
- US-A- 5 171 394

## Description

The present invention relates to a tyre for vehicle wheels comprising: a carcass structure having at least one carcass ply comprising thread-like elements each extending in a substantially "U"-shaped conformation around the cross section profile of the tyre, and a pair of circumferentially inextensible annular structures each engaged close to a respective inner circumferential edge of the carcass ply; optionally, a belt structure applied to the carcass structure at a circumferentially outer position thereof; a tread band applied to the belt structure at a circumferentially outer position thereof; at least one pair of sidewalls applied to the carcass structure at laterally opposite positions, wherein said at least one carcass ply comprises: a plurality of strip-like lengths each comprising at least two of said thread-like elements disposed longitudinally and in parallel to each other and at least partly coated with at least one layer of raw elastomer material, each of said strip-like lengths extending in a substantially U-shaped conformation around the cross section profile of the tyre, to define two side portions substantially extending in planes orthogonal to a geometric axis of rotation of the tyre at mutually spaced apart positions in an axial direction, and a crown portion extending in a radially outer position between the side portions, said crown portions being disposed in side by side relationship along the circumferential extension of the tyre, whereas the side portions of each strip-like length are each partly covered with a side portion of at least one adjacent strip-like length.

Manufacture of tyres for vehicle wheels involves formation of a carcass structure essentially consisting of one or more carcass plies substantially having a toroidal conformation and the axially opposite side edges of which engage respective circumferentially inextensible annular reinforcing elements called "bead cores".

Applied to the carcass structure, at a circumferentially external position thereof, is a belt structure comprising one ore more belt strips in the form of a closed ring, essentially consisting of textile -or metal cords suitably oriented relative to each other and to the cords belonging to the adjacent carcass plies.

A tread band currently consisting of a strip of elastomer material of appropriate thickness is applied to the belt structure, at a circumferentially external position thereof.

It is to point out that, to the aims of the present invention, by the term "elastomer material" it is intended a rubber blend in its entirety, that is the assembly made up of a base polymer suitably amalgamated with mineral fillers and/or additives of any other type.

Finally, to the opposite sides of the tyre being manufactured a pair of sidewalls are applied, each of them covering a side portion of the tyre included between a so-called shoulder region, located close to the corresponding side edge of the tread band, and a so-called bead located at the corresponding bead core.

In accordance with traditional production methods, essentially the above listed tyre components are first made separately from each other to be then assembled during a tyre-manufacturing step.

For instance, for making the carcass ply or plies to be associated with the bead cores to form the carcass structure, production of a rubberized fabric comprising longitudinally-disposed continuous textile or metallic cords, through an extrusion and/or calendering process, is first required. This rubberized fabric is submitted to a transverse-cutting operation to produce lengths of predetermined sizes that are subsequently joined together so as to give rise to a continuous ribbon-like semifinished product having transversely-disposed parallel cords.
Then this article of manufacture is to be cut into pieces the length of which is correlated with the circumferential extension of the carcass to be made.

Production methods have been recently proposed which, instead of resorting to the production of semifinished products, make the carcass structure directly during the tyre-manufacturing step.

For example, US Patent 5,453,140 herein quoted as an example of the most pertinent state of the art, discloses a method and an apparatus forming a carcass ply starting from a single cord previously wound around a reel.

According to the method and apparatus described in the above patent, at each operating cycle of the apparatus the cord drawn from the reel by power-driven idler rollers and maintained taut by a pneumatic tensioning system is cut to size to obtain a length of preestablished extension.

The cord length is picked up by a pick-up element mounted on a belt wound over power-driven pulleys to be extended transversely on the outer surface of a toroidal support.

The length ends are then engaged by bending members of the belt type operating on the opposite sides of the toroidal support for radially applying the cord length to the toroidal support by means of slide elements acting like fingers along the side portions of the cord length.

Repetition of the above described operating cycle leads to deposition of a number of cord lengths circumferentially disposed in side relationship until the whole circumferential extension of the toroidal support has been covered.

Necessarily, the toroidal support is previously coated with a layer of raw rubber having a dual function, i.e. that of adhering to the cords deposited thereon so as to conveniently hold them in a fixed positioning, and that of constituting an air-proof inner liner in the finished tyre.

Tyres obtained by this production method have a carcass structure in which the carcass ply or plies consist of individual cords each having two side portions axially spaced apart from each other and oriented radially of the rotation axis of the tyre, and a crown portion extending at a radially outer position between the side portions.

Within the scope of the carcass structure manufacture, it is also known that close to each of the tyre beads, the opposite ends of the individual cords forming a carcass ply are arranged, in an alternating sequence, at axially opposite positions relative to an annular anchoring element forming said bead core, as can be learnt from patent EP 0 664 231.

Another example of a method of making tyres is disclosed on the document US 4,248,287. According to such a document the tyre is obtained at first by the accomplishment of a carcass structure which is formed by applying a plurality of strip-like sections onto a toroidal support. Thereafter, a further carcass layer is obtained applying a continuous strip-like band on the layer constituted by the strip-like sections. Subsequently, reinforcing annular structures are applied close to pneumatic beads. Then, the edges of structure carcass are overlapped around the beads. The carcass structure is vulcanized and a tread band is applied on the external surface of the carcass structure. Finally, the pneumatic tyre is subjected to another vulcanizing step.

In accordance with the present invention, within the tyre-manufacturing scope remarkable advantages have been found to be achieved if the carcass ply or plies are made by depositing strip-like lengths instead of individual cords, each of said lengths essentially comprising a layer of raw elastomer material incorporating two or more parallel thread-like elements disposed longitudinally.

In more detail, the invention relates to a tyre for vehicle wheels characterized in that each of said inextensible annular structures comprises a first circumferentially inextensible annular insert substantially in the form of a circle ring disposed coaxially with the tyre and adjacent to an inner circumferential edge of the first carcass ply, said first annular insert being formed with at least one elongated element extending in concentric coils.

In more detail, the side portions of said strip-like lengths mutually converge towards the geometric axis of rotation of the tyre.

Advantageously mutual covering of the side portions of the deposition lengths progressively decreases starting from a maximum value at radially inner ends of the side portions until a zero value at transition regions between said side portions and crown portions.

In a preferential solution the individual strip-like lengths are disposed according to a circumferential distribution pitch corresponding to the width of the strip-like lengths themselves.

In accordance with a possible alternative embodiment, the individual strip-like lengths are disposed according to a circumferential distribution pitch corresponding to a multiple of the width of the strip-like lengths.

Preferably, each strip-like length has a width corresponding to a submultiple of the circumferential tyre extension, as measured at an equatorial plane thereof.

According to a further aspect of the invention, the side portions of the strip-like lengths have regions of increased width close to the inner circumferential edges of the carcass structure.

The thread-like elements included in each strip-like length are mutually moved apart at said regions of increased width.

In a preferential embodiment, each strip-like length has a width included between 3 mm and 20 mm, and preferably comprises three to ten thread-like elements.

Each of said thread-like elements may be advantageously made of a textile cord of a diameter included between 0.6 and 1.2 mm, or a metallic cord of a diameter included between 0.3 mm and 2.1 mm.

Preferably, the thread-like elements are disposed in the strip-like length according to a mutual distance between centres not lower than 1.5 times the diameter of the thread-like elements, and a density of at least six thread-like elements/centimetre, circumferentially measured on the carcass structure at the equatorial median plane of the tyre.

In accordance with a further innovatory aspect of the invention, which can be also advantageously adopted independently of the innovatory features set forth above, each of said inextensible annular structures further comprises: a second circumferentially inextensible annular insert substantially in the form of a crown disposed coaxially with the tyre at a position axially spaced apart from the first annular insert, said second annular insert being formed with at least one elongated element extending in concentric coils; a filling body of elastomer material interposed between the first and second annular anchoring elements and intimately joined to the latter ones.

Preferably and advantageously, the carcass structure further comprises at least one second carcass ply externally applied to the first carcass ply.

This second carcass ply preferably has thread-like elements disposed according to a crossed orientation relative to the thread-like elements of the first carcass ply.

The second carcass ply may be advantageously made in the same manner as the first carcass ply, and may have respective strip-like lengths disposed according to a crossed orientation relative to the strip-like lengths of the first carcass ply.

The strip-like lengths or in any case the thread-like elements of each of said carcass plies conveniently have an orientation inclined at an angle included between 0° and 25° relative to a plane radial to a geometric axis of rotation of the tyre.

Advantageously, the first annular insert can be applied to an outer surface of the first carcass ply in contact relationship therewith.

The second circumferentially inextensible annular insert in turn can be applied to an inner surface of said second carcass ply, in contact relationship therewith.

Alternatively, the second circumferentially inextensible annular insert can be applied to an outer surface of said second carcass ply in contact relationship therewith, said second carcass ply having inner circumferential portions each interposed between the filling body and the second inextensible annular insert belonging to the respective annular reinforcing structure.

The second circumferentially inextensible annular insert is also preferably provided to have a radial extension greater than the radial extension of the first circumferentially inextensible annular insert.

The filling body of elastomer material conveniently has a hardness included between 70° and 92° Shore A.

The carcass structure may also comprise at least one liner made of an air-proof elastomer material which coats said carcass ply internally of the tyre.

Said liner is preferably made of at least one ribbon-like band of an air-proof elastomer material extending in side-by-side coils along the cross section profile of the tyre.

Further features and advantages will be best understood from the detailed description of a preferred but non-exclusive embodiment of a tyre for vehicle wheels according to the present invention. This description will be taken hereinafter with reference to the accompanying drawings, given by way of non-limiting example, in which:
- Fig. 1 is a fragmentary splitted perspective view of a tyre in accordance with the present invention;
- Figs. 2 to 5 diagrammatically show an apparatus for making the carcass ply, according to different operating steps respectively, seen in a direction orthogonal to a diametrical section plane of a toroidal support carrying the tyre during the manufacturing step;
- Fig. 6 is a diagram showing manufacture of a continuous strip-like element intended for forming the carcass ply or plies;
- Fig. 7 shows an enbodiment of said strip-like element in cross section;
- Fig. 8 is a fragmentary perspective view diagrammatically showing the deposition sequence of strip-like lengths for the purpose of forming a first carcass ply of the tyre in accordance with the invention;
- Fig. 9 is a fragmentary diametrical section view of an inextensible annular structure to be inserted at the tyre bead, during a moulding step for manufacturing the tyre;
- Fig. 10 is a fragmentary perspective view of an inextensible annular structure laterally applied between a first and a second carcass plies;
- Fig. 11 is a diagram showing the carcass structure of a tyre in accordance with the invention, seen laterally and in trasparency for highlighting the mutual arrangement of the portions in superposed relationship of the individual strip-like lengths belonging to two different carcass plies;
- Fig. 12 is a cross half-section showing a conventional tyre mounted on a respective mounting rim and in a condition of slip running and partial deflation;
- Fig. 13 is a cross half-section showing a tyre according to the invention mounted on a respective mounting rim and in a condition of slip running and partial deflation.

With reference to the drawings, a tyre for vehicle wheels according to the present invention has been generally identified by reference numeral 1.

Tyre 1 essentially comprises a carcass structure 2 having at least one first carcass ply 3 having a substantially toroidal conformation and in engagement, by its opposite circumferential edges, with a pair of inextensible annular structures 4, each of which is located, when the tyre has been completed, at the region usually identified as " tyre bead".

Applied to the carcass structure 2 at a circumferentially outer position thereof, is a belt structure 5 comprising one or more belt strips 6a, 6b and 7. A tread band 8 is circumferentially superposed on the belt structure 5 and longitudinal and transverse cuts 8a are formed in said tread band 8, following a moulding operation carried out concurrently with the tyre vulcanization, and such disposed as to define a desired "tread pattern".

The tyre also comprises a pair of so-called "sidewalls" 9 laterally applied to opposite sides of the carcass structure 2.

The carcass structure 2 may possibly be coated, on its inner walls, with a liner 10, i.e., essentially consisting of a layer of air-proof elastomer material, suitable to ensure the hermetic seal of the inflated tyre.

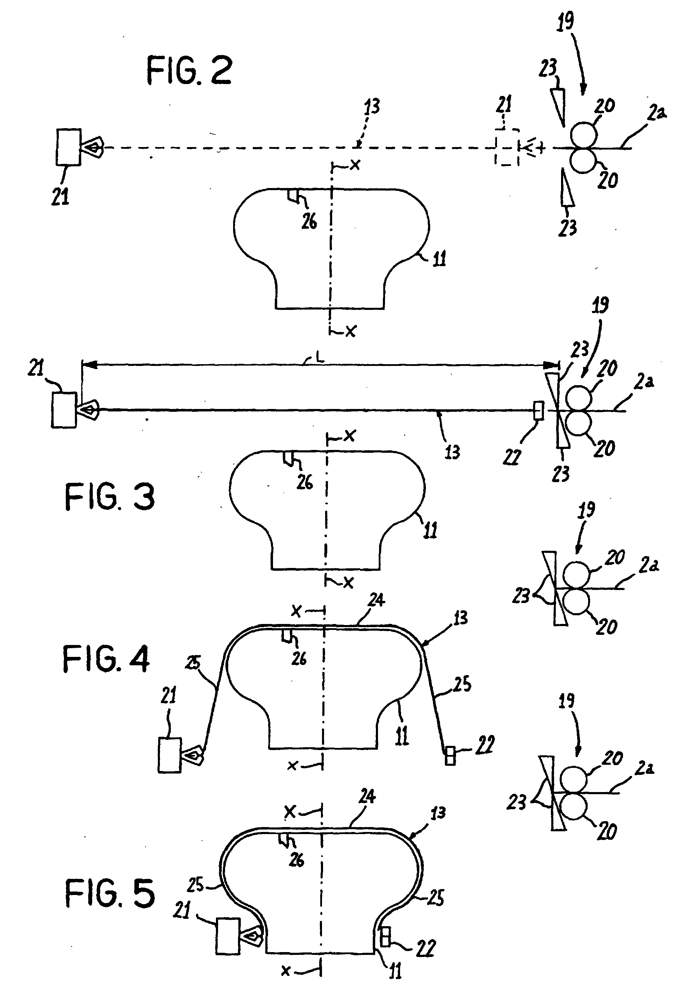

Assembling of the above listed components, as well as production of one or more of said components, takes place with the aid of a toroidal support 11, diagrammatically shown in Figs. 2 to 5, having the same configuration as the inner walls of the tyre to be manufactured.

In a preferential solution the toroidal support 11 has reduced sizes relative to those of the finished tyre, according to a linear amount preferably included between 2% and 5%, measured, just as an indication, along the circumferential extension of the support itself at an equatorial plane X-X thereof which is coincident with the equatorial plane of the tyre.

The toroidal support 11, which is not described or illustrated in detail in that it is not particularly of importance to the purposes of the invention, may for example consist of a collapsible drum or an inflatable bladder suitably reinforced, so that it may take and maintain the desired toroidal conformation under inflation conditions.

After taking into account the above statements, manufacture of tyre 1 first involves formation of the carcass structure 2 starting with possible formation of the liner 10.

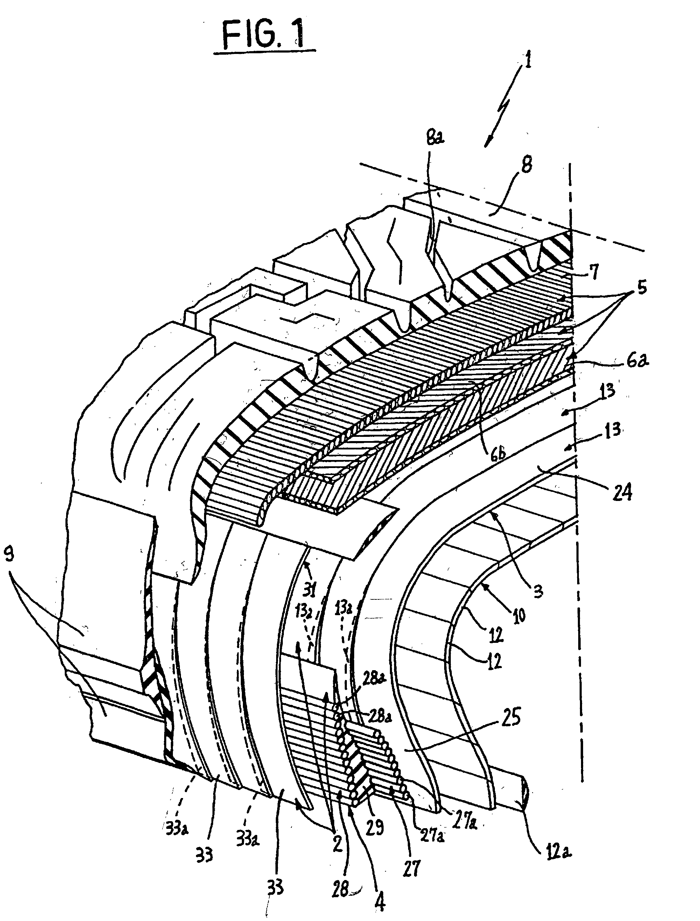

This liner 10 can be advantageously made by circumferentially winding around the toroidal support 11, at least one ribbon-like band 12 of an air-proof elastomer material, produced from an extruder and/or a calender located close to the toroidal support itself. As viewed from Fig. 1, winding of the ribbon-like band 12 substantially takes place in circumferential coils consecutively disposed in side by side relationship to follow the cross section profile of the outer surface of the toroidal support 11.

For descriptive purposes, by "cross section profile" it is herein intended a configuration exhibited by the half-section of the toroidal support 11 sectioned along a plane radial to a geometric rotation axis thereof, not shown in the drawings, which is coincident with the geometric axis of rotation of the tyre being manufactured.

Concurrently with winding of the ribbon-like band 12, application of a pair of auxiliary annular elements 12a can be carried out close to the inner circumferential edges of the carcass structure during its manufacturing step. Each of these auxiliary annular elements 12a can be obtained for example by winding the ribbon-like band 12 in a coil axially disposed in side by side relationship with the corresponding coil located at the inner perimetric edge of liner 10 defined or to be defined on the toroidal support 11. Alternatively, the auxiliary annular elements 12a can be made up of at least one auxiliary ribbon-like band obtained from a respective extruder located at the toroidal support 11.

In accordance with the present invention, the carcass ply 3 is directly formed on the toroidal support 11 by depositing thereon, as better clarified in the following, a plurality of strip-like lengths 13 obtained from at least one continuous strip-like element 2a preferably having a width included between 3 mm and 20 mm.

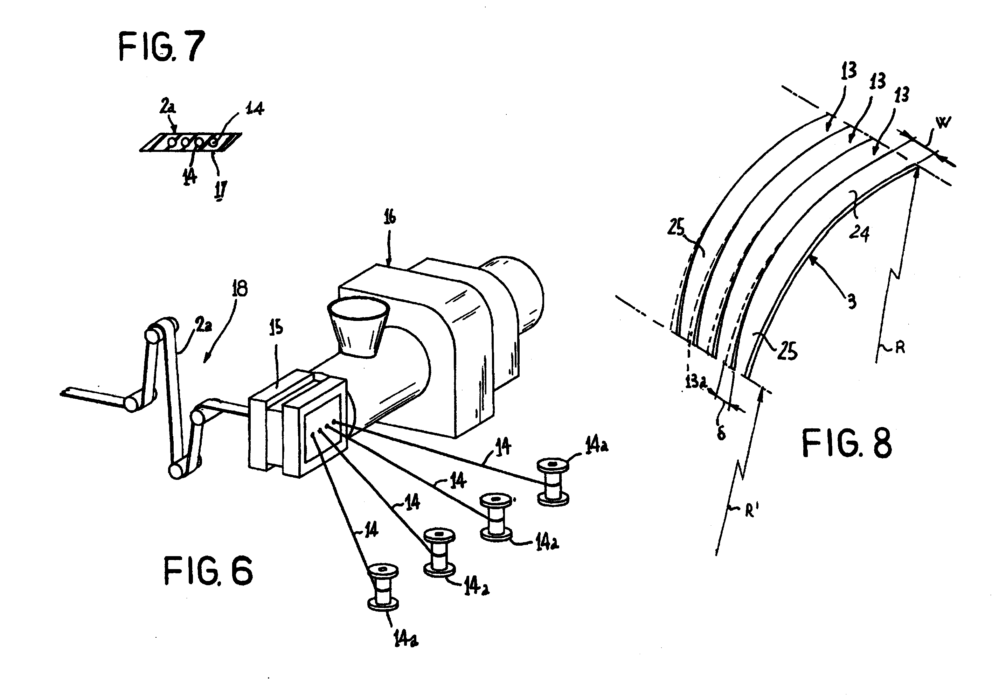

As shown in Fig. 6, preparation of the continuous strip-like element 2 essentially involves that two or more thread-like elements 14, and preferably three to ten thread-like elements 14, fed from respective reels 14a, should be guided through a first extruder 15 associated with a first extrusion apparatus 16 carrying out feeding of raw elastomer material through the extruder itself.

It is pointed out that, in the present description by "extruder" it is intended that part of the extrusion apparatus, also identified in this particular field by the term "extrusion head", provided with a so-called "die" passed through by the product being worked at an outlet port shaped and sized according to the geometrical and dimensional features to be given to the product itself.

The elastomer material and thread-like elements 14 are intimately joined together within the extruder 15, thereby generating the continuous strip-like element 2a at the outlet thereof, which element is formed of at least one layer of elastomer material 17 in the thickness of which the thread-like elements themselves are incorporated.

Depending on requirements, it is possible to guide the thread-like elements 14 in the extruder 15 in such a manner that they are not integrally incorporated into the layer of elastomer material 17 but appear on one or both surfaces thereof.

The thread-like elements 14 may each consist for example of a textile cord preferably having a diameter included between 0.6 mm and 1.2 mm, or a metallic cord preferably having a diameter included between 0.3 mm and 2.1 mm.

Advantageously, if required, the thread-like elements 14 can be disposed in the continuous strip-like element 2a in such a manner that they give the carcass ply 3 thus obtained unexpected qualities of compactness and homogeneity. For the purpose, the thread-like elements 14 can be for example disposed according to a density greater than six thread-like elements/centimetre, measured circumferentially on the carcass ply 3 close to the equatorial plane X-X of tyre 1. In any case it is preferably provided that the thread-like elements 14 should be disposed in the strip-like element 2a according to a mutual distance between centres not lower than 1.5 times the diameter of the thread-like elements themselves, in order to enable an appropriate rubberizing operation between the adjacent threads.

The continuous strip-like element 2a coming out of extruder 15 can be advantageously guided, optionally through a first accumulator-compensator device 18, on a deposition apparatus 19 diagrammatically shown in Figs. 2 to 5.

The deposition apparatus 19 essentially comprises first guide members 20, consisting for example of a pair of opposite rollers intended for engagement of the continuous strip-like element 2a produced by the extruder 15, downstream of the accumulator-compensator device 18.

Downstream of the first guide members 20, the strip-like element 2a comes into engagement with a first grip member 21 movable in a direction oriented transversely to the equatorial plane X-X of the toroidal support 11.

In more detail, the first grip member 21 is movable between a first operating position in which, as shown in Fig. 2, it engages one end of the continuous strip-like element 2a close to the first guide members consisting of opposite rollers 20, and a second operating position in which, as shown in Fig. 3, it is moved apart from the first guide member in order to lay down the continuous strip-like element 2a transversely of the equatorial plane X-X of the toroidal support 11.

When the first grip member 21 has reached the second operating position, a second grip member 22 engages the continuous strip-like element 2a close to the first guide members 20.

Then, a cutting member 23 is applied to cut the continuous strip-like element 2a at a stretch thereof included between the second grip element 22 and the first guide members 20, giving rise to formation of a strip-like length 13 of a predetermined extension "L".

Following the cutting action by the cutting member 23, the obtained strip-like element 13 is laid down transversely and at a centred position relative to the equatorial plane of the toroidal support.

Afterwards, the grip members 21 and 22 are simultaneously translated in the direction of the geometric axis of the toroidal support 11 by radially moving the strip-like length 13 close to the toroidal support. Under this circumstance, formation of a crown portion 24 takes place at a centred position on the longitudinal extension of the strip-like length 13, which portion extends at a radially outer position on the toroidal support 11.

As clearly viewed from Fig. 4, as the radial movement of the grip members 21 and 22 goes on the opposite ends of the strip-like length 13 are moved radially close to the geometric axis of rotation of the toroidal support 11, giving rise to formation of two side portions 25 substantially extending in planes orthogonal to the geometric axis of rotation of the toroidal support, at positions axially spaced apart from each other.

By a possible subsequent movement of the grip members 21 and 22 close to the toroidal support 11, the opposite ends of the strip-like element are definitively applied to the toroidal support 11 so that deposition of length 13 is completed, this length taking a substantially U-shaped configuration around the cross section profile of the toroidal support.

Components intended for support and guided movement of the grip members 21 and 22 are not shown in the accompanying drawings as they can be made in any manner convenient for a person skilled in the art, and in any case they are not of importance to the aims of the present invention.

If required, the side portions 25 of the strip-like length can be submitted to a pressing step against the side walls of the toroidal support 11. For the purpose, a pair of pressing rollers or equivalent means not shown may be provided for operation on the opposite sides of the toroidal support 11, which rollers are each arranged to act on the respective side portion 25 by a thrust action and simultaneous radial sliding towards the geometric axis of rotation of the toroidal support 11.

Due to the sticky character of the raw elastomer material forming layer 17 coating the thread-like elements 14, a steady adhesion of the strip-like length 13 to the surfaces of the toroidal support 11 is ensured, even in the absence of liner 10 on said toroidal support. In more detail, the above described adhesion takes place as soon as the strip-like length 13 comes into contact with the toroidal support 11 at a radially external region of its cross section profile.

In addition to, or in place of the above described exploitation of the natural sticky character of the elastomer material, holding of one or more strip-like lengths 13 on the toroidal support 11 can be obtained by carrying out a suction action produced through one or more appropriate holes 26 arranged on the toroidal support.

The toroidal support 11 can be driven in angular rotation according to a step-by-step movement in synchronism with operation of the deposition apparatus 19, in such a manner that at each cutting action of each strip-like length 13 deposition of the latter onto the toroidal support takes place in a circumferential side by side relationship with the strip-like length 13 previously deposited.

In the embodiment diagrammatically shown in the accompanying figures, where the circumferential distribution pitch of the individual strip-like lengths 13 corresponds to the width of same, the angular-rotation pitch of the toroidal support 11 will correspond to the width of said lengths.

However, the circumferential distribution pitch of the strip-like lengths 13 may be provided to correspond to a multiple of their width. In this case, the angular-movement pitch of the toroidal support 11 will correspond to said circumferential distribution pitch. It is to point out that, to the aims of the present invention, when it is not otherwise stated, the term "circumferential" refers to a circumference lying in the equatorial plane X-X and close to the outer surface of the toroidal support 11.

Due to the above described operating sequence of the deposition apparatus 19, in the first carcass ply 3 obtained the crown portions 24 of each strip-like length 13 are consecutively disposed in side by side relationship along the circumferential extension of the toroidal support 11, whereas each of the side portions 25 of each length 13 is partly superposed with the side portion 25 of at least one length 13 previously laid down, and also partly covered with the side portion 25 of at least one length 13 laid down subsequently. In the accompanying figures, the overlapping regions of the strip-like lengths 13 forming the first carcass ply 3 are identified by 13a.

As clearly shown in Fig. 8, the side portions 25 in mutual superposition relationship move towards each other substantially in the direction of the geometric axis of rotation of the toroidal support 11, at an angle δ the value of which is correlated with the width "W" of the strip-like elements 13, and in any case with the circumferential distribution pitch thereof, as well as with the value of a maximum radius R to be measured at a point of maximum distance from the geometric axis of rotation of the toroidal support 11.

Due to the mutual convergence between the contiguous side portions 25, mutual superposition or covering of same, i.e. the circumferential width of the overlapping regions 13a, progressively decreases starting from a maximum value at the radially inner ends of the side portions, until a zero value at the transition region between the side portions 25 and crown portions 24.

It is to note that, due to the difference between the maximum radius R and a minimum radius R', to be measured at a point of minimum distance from the geometric axis of rotation of the toroidal support 11, the average density of the thread-like elements 14, i.e. the amount of the thread-like elements 14 present in a circumferential section of given length, progressively increases on moving close to said geometric rotation axis.

In fact, this increase in density is proportional to the ratio value between the maximum radius R and minimum radius R'.

It is also to note that the thread-like elements 14 belonging to two mutually superposed side portions 25 are disposed in respectively crossed orientations at an angle corresponding to said angle δ, in correlation with the width of the individual lengths 13 and their circumferential distribution pitch, as well as with the value of the maximum radius R.

If, depending on requirements, one wishes to modify the crossing angle of the thread-like elements 14, a pressing step may be provided to be executed on the continuous strip-like element 2a in the regions of its longitudinal extension corresponding to the ends of the strip-like elements 13 to be obtained from said cutting actions. In this manner regions of greater width located at the inner circumferential edges of the formed carcass ply 3 are defined on the extension of each strip-like length 13.

Said pressing action can be carried out by said guide rollers 20 or by an auxiliary pressing roller (not shown) suitable adapted to press the continuous strip-like element 2a in order to cause pressing of same at the longitudinal-extension sections intended to form the side portions 25 of the individual lengths 13. The pressing action causes a reduction in the thickness of the elastomer layer 17 and an increase in the width of the strip-like element 2a which, as a result, will make the thread-like elements 14 move apart from each other.

By suitably inclining the orientation of the geometric axis of rotation of the toroidal support 11 relative to the movement direction of the first grip member 21, a desired inclination can be given to the crown portions 24 of lengths 13 included, by way of example, between 0° and 25° relative to a radial plane passing by the geometrical axis. In more detail, this inclination may be advantageously included between 0° and 3° if tyre 1 is provided with only one carcass ply 3, or between 10° and 20°, and more preferably it may correspond to 15° if, as provided in the embodiment herein illustrated, the carcass structure is comprised of two carcass plies 3, 31.

Accomplishment of a carcass structure 2 generally comprises the step of applying said inextensible annular structure 4 to an area close to each of the inner circumferential edges of the carcass ply 3 obtained in the previously described manner, for the purpose of creating the carcass regions known as "beads", which are specifically intended for ensuring anchoring of the tyre to a corresponding mounting rim; in accordance with a preferred embodiment of the tyre, the carcass ply thereof is obtained in the above described manner.

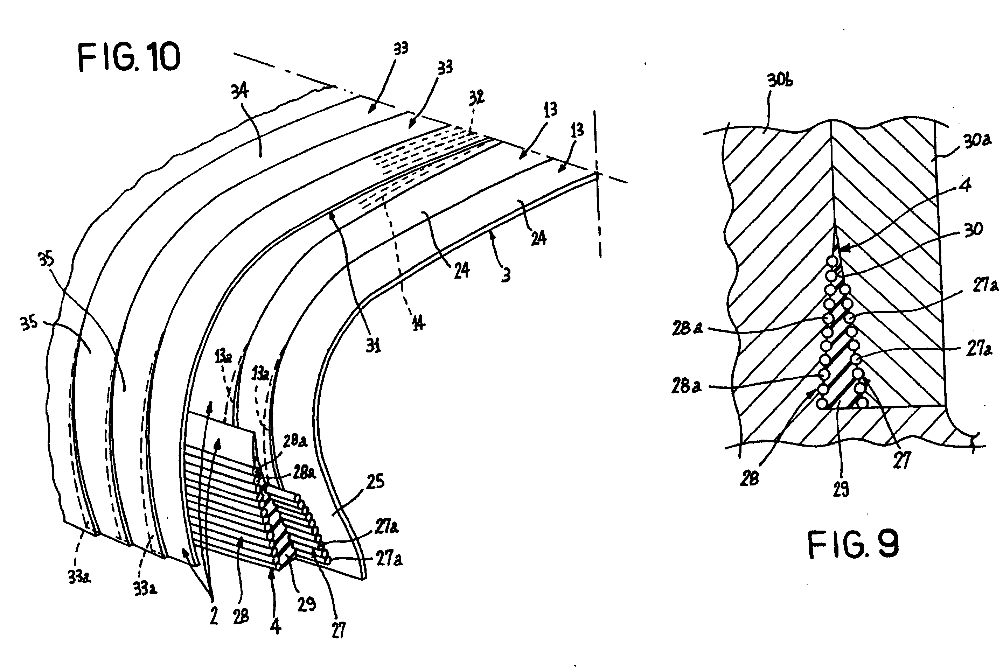

Each of said inextensible annular structures 4 (Fig. 10) comprises a first circumferentially inextensible annular insert 27, substantially in the form of a circle ring concentric with the geometric axis of rotation of the toroidal support 11 and located close to a corresponding inner circumferential edge of the first carcass ply 3.

The first annular insert 27 is made of at least one elongated metal element wound up to form several substantially concentric coils 27a. Coils 27a can be defined by a continuous spiral or by concentric rings formed of respective elongated elements.

Combined with the first annular insert 27 is a second circumferentially inextensible annular insert 28, substantially extending in the form of a respective circle ring coaxially disposed in side by side relationship with the first annular insert 27.

The second annular insert 28 too is preferably made of at least one elongated metal element wound up to form several substantially concentric coils 28a that can be defined by a continuous spiral or by concentric rings formed of respective elongated elements.

Preferably, the second annular insert 28 has a radial extension given by the difference between the minimum inner radius and the maximum outer radius of the annular insert, which is greater than the radial extension of the first annular insert 27.

Interposed between the first and second annular inserts 27, 28 is at least one filling body 29 of elastomer material preferably having a hardness included between 70° and 92° Shore A.

As better clarified In the following, during the tyre use the above described annular structures 4 efficiently counteract tendency of the beads to rotate around their resting points on the rim under the effect of slip thrusts directed parallelly to the rotation axis of tyre 1. This tendency to rotation is particularly apparent when the tyre is employed under conditions of partial or complete deflation.

Preferably, accomplishment of each annular structure 4 involves formation of a first inextensible annular insert 27 within a moulding cavity 30 defined in a mould 30a, 30b, by deposition of at least one elongated element in concentric coils 27a disposed in mutual side by side relationship according to circumferences of increasingly growing diameter around their geometric winding axis, corresponding to the rotation axis of the tyre.

This operation can be advantageously carried out through winding of the elongated element in a helical seating arranged in a first cheek 30a of the mould 30a, 30b which can be driven for the purpose in rotation around its own geometric axis.

Then, within the moulding cavity 30, a second annular insert 28 is located, formation of which can advantageously take place in the same manner as described for the first annular insert 27.

The deposition step of the elongated element or elements intended for formation of one or both annular inserts 27, 28 can be advantageously preceded by a rubberizing step during which the elongated element, preferably of metal material, is coated with at least one layer of raw elastomer material that not only ensures an excellent rubber-metal bond on the elongated element itself, but also promotes adhesion thereof for a steady placement in the above mentioned helical seating.

The first cheek 30a and/or the second cheek 30b may be also advantageously provided to be made of a magnetic material, or to be activated in an electromagnetic manner so as to conveniently attract and retain the respective elongated element, thereby ensuring a steady positioning of coils 27a and/or 28a as they are formed.

Then, the filling body 29 is formed within the moulding cavity 30. Forming of said body may be conveniently carried out by interposing at least one annular element of raw elastomer material of predetermined volume between the first and second annular inserts 27, 28 formed on the respective cheeks 30a, 30b. This annular element can have any convenient cross section conformation, provided that its volume corresponds to the inner volume of the moulding chamber 30 when cheeks 30a, 30b are moved close to each other in a closed condition of the mould.

Once the annular element has been positioned between cheeks 30a, 30b, closure of the moulding cavity 30 by mutual approaching of the cheeks is carried out. Under this circumstance, the volume of the moulding cavity 30 is reduced, so that the annular element of raw elastomer material is pressed between the first and second annular inserts 27, 28 being submitted to deformation until it completely fills the moulding cavity, thereby forming the filling body 29 which is intimately joined to the first and second annular inserts 27, 28.

As an alternative solution to the above, formation of the filling body 29 can be carried out for example by filling the moulding cavity 30 with elastomer material introduced by injection or any other manner convenient for a person skilled in the art, after moving cheeks 30a, 30b close to each other.

The above described accomplishment of the inextensible annular structures 4 can advantageously take place close to the toroidal support 11, so that said structures can be directly removed from mould 30a, 30b and laterally applied to the first carcass ply 3 by appropriate mechanical handling devices not described as not of importance to the aims of the invention.

In accordance with a further preferential feature of the invention, accomplishment of the carcass structure 2 further involves formation of at least one second carcass ply 31. Advantageously, this second carcass ply 31 can be formed directly upon the first carcass ply 3 and the inextensible annular structures 4, so that, as clearly shown in Fig. 10, the second annular insert 28 of each annular structure 4 is disposed in contact with an inner surface of the second carcass ply.

In accordance with a possible alternative solution, accomplishment of each annular structure 4 may first involve formation of the first annular insert 27 alone joined to the filling body 29, to carry out application of the second annular insert 28 subsequently to formation of the second carcass ply 31. In this case, each of the inner circumferential portions of the second carcass ply 31 is interposed between the respective filling body 29 and the second annular insert 28, which is applied to the outer surfaces of the second carcass ply itself, in contact relationship therewith.

Preferably the second carcass ply 31 is manufactured in such a manner that it has its respective thread-like elements 32 disposed according to a crossed orientation relative to the thread-like elements 14 belonging to the first carcass ply 3.

In more detail, formation of the second carcass ply 31 conveniently takes place in the same manner as previously described with reference to manufacturing of the first carcass ply 3, i.e. by sequential deposition of respective strip-like lengths 33, to define respective crown portions 34 consecutively disposed in side by side relationship in a circumferential direction and side portions 35 each partly covered by the side portion 35 of the adjacent strip-like length 33. In the accompanying figures, the covering or mutual-superposition regions of the strip-like lengths 33 forming the second carcass ply 31 are denoted by 33a.

Conveniently, the strip-like lengths 33 of the second carcass ply 31 are laid down according to a crossed orientation relative to the strip-like lengths 13 forming the first carcass ply. In addition, it is preferably provided that inclination of the strip-like lengths 33 of the second carcass ply 31, with reference to the equatorial plane X-X, should substantially have the same value as the inclination of the strip-like lengths 13 belonging to the first carcass ply 3.

In tyres of the radial type, a belt structure 5 is currently applied to the carcass structure 2.

This belt structure 5 may be made in any manner convenient for a person skilled in the art and in the embodiment shown it essentially comprises a first and a second belt strips 6a, 6b having cords with a respectively crossed orientation. Superposed on the belt strips is an auxiliary belt strip 7, for instance obtained by winding at least one continuous cord in coils axially disposed in side by side relationship on the first and second belt strips 5, 6.

Then the tread band 8 and sidewalls 9, which are also obtained in any manner convenient for a person skilled in the art, are applied to the belt structure 5.

Embodiments of a belt structure, sidewalls and a tread band that can be advantageously put into practice for accomplishment of the tyre in reference on the toroidal support 11 are described in the European Patent Application No. 97830632.2 in the name of the same Applicant.

Tyre 1 as manufactured and after removal of same from support 11, can be now submitted to a vulcanization step that can be carried out in any known and conventional manner.

According to a possible alternative solution, an air tube of closed tubular section may be advantageously associated with tyre 1 in addition to, or in place of liner 10, before the vulcanization step, which air tube is inserted into carcass 2 after the tyre has been removed from the toroidal support 11. This air tube, not shown in the accompanying drawings, will be inflated after the tyre has been introduced into a vulcanization mould, to supply an inner pressure suitable to ensure a perfect adhesion of the tyre against the mould walls and, in particular, against the mould parts intended for defining the longitudinal and transverse cuts 8a of the tread pattern.

According to a further preferential feature of the present invention, during the vulcanization step the carcass plies 3, 31 and belt strips 6a, 6b, 7 are submitted to a stretching step to achieve a pretensioning thereof, giving rise to a tyre expansion of a linear amount, measured on the circumferential extension at the equatorial plane X-X of the tyre itself, included by way of example between 2% and 5%. This stretching step can be achieved by effect of the inflation pressure of the above mentioned air tube, or other type of inflatable bladder employed in the vulcanization apparatus.

The present invention achieves important advantages.

In fact, the tyre in reference can be obtained through manufacture of the different components directly on a toroidal support on which the tyre is gradually formed or in any case very close thereto. In this way all problems connected with manufacture, storage and management of semifinished products which are common to manufacturing processes of the traditional type are eliminated.

It is to note in particular that formation of the carcass ply or plies by deposition of strip-like lengths each formed of several cords incorporated into one elastomer layer enables important advantages to be achieved. First of all, in comparison with the method described in the above mentioned US Patent 5,362,343, the manufacturing times for each carcass ply can be greatly reduced, due to the simultaneous deposition of as many thread-like elements as they are contained in each strip-like length 13 or in the continuous strip-like element 2a from which lengths 13 come. Employment of the strip-like lengths 13 also dispenses with the need for previously depositing liner 10 onto the toroidal support. In fact, the elastomer layer 17 employed in forming the continuous strip-like element 2a is able by itself of ensuring an efficient adhesion of element 2a to the toroidal support 11, thereby ensuring a steady positioning of the individual lengths 13, 33.

Accuracy in positioning of the strip-like lengths 13, 33 and thread-like elements integrated thereinto is further improved by the fact that each strip-like length has an important structural consistency that makes it insensitive to vibrations or similar oscillation effects which can be transmitted by the deposition apparatus 19. In this connection it is to note that deposition of individual cords, as described in US Patent No. 5,362,343, may be somewhat problematic, due exactly to vibrations and/or oscillations undergone by said cords during the deposition step.

Furthermore, simultaneous deposition of a plurality of thread-like elements in accordance with the invention enables the deposition apparatus 19 to be operated at slower rates than required when deposition of individual cords is concerned, which is a further advantage in terms of working accuracy without on the other hand impairing productivity.

Besides, deposition of strip-like lengths directly crownwise to a toroidal support of a profile substantially identical with that of the finished tyre enables densities to be achieved that cannot be reached in the art by known methods providing deposition of a carcass ply in the form of a cylindrical sleeve and subsequent shaping of same into a toroidal form, with consequent thinning of the carcass ply cords disposed crownwise to the finished tyre.

In addition to the above, each strip-like length can be steadily fastened to the toroidal support by a vacuum effect produced through possible suction ducts 26, which steady fastening by vacuum cannot be achieved by known processes carrying out deposition of individual cords.

If required, the side portions of the strip-like lengths can be disposed at a suitably increased inclination relative to a direction radial to the toroidal support axis, which will enable the expansion undergone by the tyre during the stretching step imposed to it on vulcanization to be efficiently helped. In fact, during this step, the side portions 25, 35 tend to take an orientation in a plane radial to the tyre together with the crown portions 24, 34 extending between the side portions.

The construction and structure conception of the subject tyre, particularly with reference to its carcass structure 2, enables important improvements to be achieved in terms of structural strength, in particular close to the sidewalls and beads, where a greater structural strength is usually required, as well as in terms of behaviour, particularly in connection with the effects of the slip thrusts that occur when tyres are run on bends.

In fact it is to note that, even if each carcass ply 3, 31 is taken into account separately from the other carcass ply, the mutual superposition or partial covering of the strip-like lengths 13, 33 gives rise to a first structural strengthening at the tyre sidewall regions. This strengthening is also promoted by the fact that, as above described, in the regions of mutual superposition of the strip-like lengths 13, 33, the thread-like elements 14, 32 belonging to the two lengths are disposed in mutually-crossed orientations.

The mutually-crossed orientation of the strip-like lengths 13, 33 forming the first and second carcass plies 3, 31 respectively constitutes a second strengthening factor for carcass structure 2. This second strengthening factor is partly represented by the mutually-crossed arrangement provided for the thread-like elements 14, 32 belonging to the first and second carcass plies 3, 31 respectively, and partly by the mutually-crossed arrangement provided for the covering or superposition regions 13a, 33a of lengths 13, 33 belonging to the first and second carcass plies.

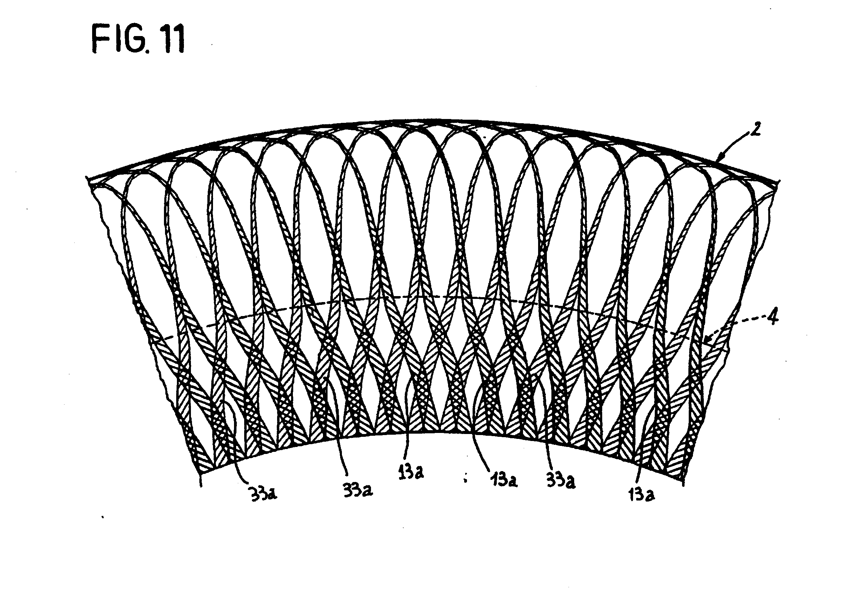

This crossed arrangement of the superposition regions 13a, 33a is clearly shown in Fig. 11. From said figure it can be easily understood that the munual-superposition regions 13a, 33a belonging to the first and second carcass plies 3, 31 respectively, define a type of network structure giving the tyre an exceptional structural strength. In particular, in this manner qualities such as resistance to accidental impacts against pavement borders or the like for example, and tyre resistance to torsional stresses around the rotation axis are improved, which will make the tyre appropriate to withstand high torque values both during acceleration and braking.

In addition to the above, the construction features of the inextensible annular structures 4 are suitable to further increase the structural strength of the tyre at the bead and sidewall regions.

In fact, the presence of the circumferentially inextensible annular inserts 27, 28 intimately joined to the carcass plies 3, 31 creates a further "bond" between the mutually-crossed thread-like elements 14, 32 belonging to the first and second carcass plies 3, 31. Thus, the carcass structure 2 is further strengthened at the regions corresponding to the tyre beads without requiring for the purpose employment of additional strip-like inserts, usually called "flippers", wound like a slipknot around the inextensible annular structures 4, said flippers being used on the contrary in the known art.

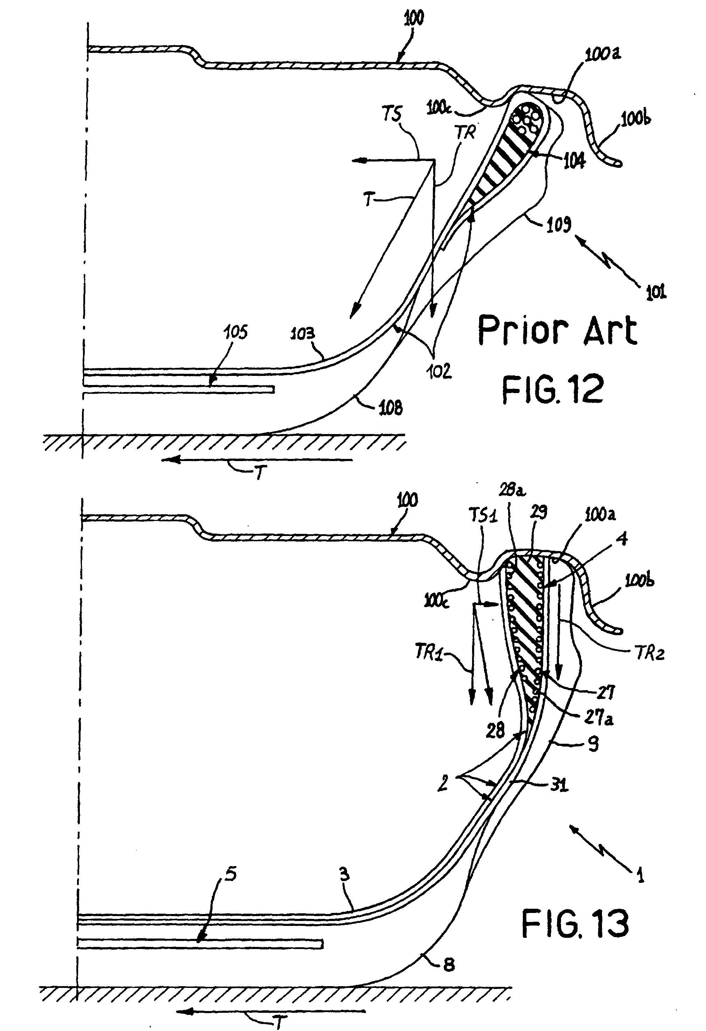

From a comparison between Figs. 12 and 13 it can be easily noticed the improvement produced by the construction expedients described above in connection with the tyre behaviour under the effect of slip thrusts directed axially of the tyre, generated when the tyre is run on a bend, for example. For the sake of clarity, section dashing has been intentionally omitted from the tyres shown in Figs. 12 and 13. It is also to point out that, for better highlighting the phenomena triggered by the slip thrusts, Figs. 12 and 13 have been made with reference to tyres under conditions of partial deflation.

In more detail, Fig. 12 shows a tyre 101 of the traditional type, mounted on a respective rim 100 that, at each tyre bead, has a bead seat 100a axially delimited by a flange 100b defining an outer side edge of the rim and a security hump 100c. The different components of tyre 101 are marked by numeric indices obtained by adding 100 to the numeric value of the indices previously employed for corresponding parts of tyre 1 in accordance with the invention.

In tyre 101 made in accordance with the known art, the carcass ply or plies tend to bend at the tyre sidewall under the effect of the slip thrust T, generated parallelly to the rotation axis of the tyre by friction of the tread band 108 on the ground, during a bend.

This slip thrust T, transmitted along the ply or plies 103 of the carcass structure 102 up to the inextensible annular structures 104, generates a radial component Tr and an axial component Ts. The radial component Tr is counteracted by the circumferential inextensibility of the annular structure 104 resting, over the whole circumferential volume thereof, on the respective seat 100a provided in rim 100. The axial component Ts, oriented towards the equatorial plane of the tyre, tends to move the tyre bead away from the flange 100b of rim 100 and is usually counteracted by the security hump 100c. The radial sizes of the security hump are however rather limited and it may easily happen that, when the axial component Ts exceeds given values, the tyre bead is removed from its respective seat 100a, instantaneously causing a full deflation and a consequent loss of functionality of tyre 100. This phenomenon is also facilitated by the fact that the tyre bead structured in accordance with the known art, under the effect of the slip thrust T, tends to "roll" on the security hump 100c.

The risks that the above described phenomenon of removal of the bead from its seat may occur are particularly important when the tyre is forced to run under conditions of partial deflation, and the carcass structure 102 is therefore subjected to undergo important deformations under the effect of the slip thrusts.

Referring now to the tyre in reference shown in Fig. 13, the annular structures 4 of the invention, interposed between the first and second carcass plies 3, 31, prevent the tyre beads from rotating, under the effect of the slip thrust T, around their resting point against the respective security humps 100c provided in rim 100.

In more detail, it is to note that the presence of the circumferentially inextensible annular inserts 27, 28 located internally of, and directly in contact with the respective carcass plies 3, 31 and mutually spaced apart by interposition of the filling body 29, efficiently prevents the bead from bending and rotating under the effect of slip thrusts. In fact, on examining Fig. 13 it can be seen that the slip thrust T would tend to bend the inextensible annular structure 4 towards the equatorial plane of tyre 1. Under this circumstance, the first annular insert 27 tends to be radially compressed, whereas the second annular insert 28 is subjected to a tensile stress in a radial direction. However, the circumferential inextensibility of the individual coils 27a, 28a forming inserts 27, 28, as well as the intimate union of said inserts with the respective carcass plies 3, 31 having the respective thread-like elements 14, 32 mutually crossed at the superposition regions 13a, 33a, inhibit the capability of bending deformation of the inextensible annular structure 4 almost completely.

The slip force T is equably shared between the first and second carcass plies and transmitted along said plies until the respective first and second inextensible annular elements 27, 28 provided in structure 4.

Under this situation the portion of the slip force T transmitted along the first carcass ply 3 until a region close to the first annular insert 27 gives rise to a radial component Tr₁ tending to move the bead away from the bead seat 100a and counteracted by the circumferential inextensibility of the annular structure 4, as well as to an axial component Ts₁ tending to push the bead against the circumferential flange 100b, thereby ensuring maintenance of a steady positioning of said bead.

The slip force T portion transmitted along the second carcass ply 31 generates a radial component Tr₂ as well, which is counteracted by the circumferential inextensibility of the second annular insert 28, and an axial component tending to push the bead against the flange 100b but which has a practically zero value when, as in the case shown, the inner circumferential edge of the second carcass ply takes an orientation perpendicular to the axis of the tyre 1.

A correct positioning of the bead is in any case ensured by the above described axial component Ts₁.

In this way the tyre having beads made in accordance with the present invention can bear the so-called "J-curve Test" without removal of the bead from its seat until inflation pressures of 0.5 bar, whereas in the known art tyres that are unable to counteract bead displacements from their seats at pressures lower than 0.8-1.0 bar are considered as acceptable.

It is also to note that the annular inserts 27 and 28 furnish a further structural protection of the tyre at the beads.

Increase in the structural strength at the sidewalls has been advantageously obtained without involving an excessive stiffening at the carcass structure crown, where the lengths of each ply are circumferentially disposed in side by side relationship in the absence of mutual superposition. This aspect is particularly advantageous with reference to high-performance lowered-profile tyres where the structural strength of the sidewalls is greatly critical, also due to the high torque values that the tyre must be able to transmit.

## Claims

1. A tyre for vehicle wheels comprising:
- a carcass structure (2) having at least one carcass ply (3, 31) comprising thread-like elements (14) each extending according to a substantially U-shaped conformation around the cross section profile of the tyre (1), and a pair of circumferentially inextensible annular structures (4) each engaged close to a respective inner circumferential edge of the carcass ply (3, 31);
- a tread band (8) applied to the carcass structure (2) at a circumferentially external position thereof;
- at least one pair of sidewalls (9) applied to the carcass structure (2) at laterally opposite positions,
wherein said at least one carcass ply (3, 31) comprises:
- a plurality of strip-like lengths (13, 33) each comprising at least two of said thread-like elements (14, 32) disposed longitudinally and parallelly to each other and at least partly coated with at least one layer of raw elastomer material (17),
- each of said strip-like lengths (13, 33) extending in a substantially U-shaped conformation around the cross section profile of the tyre (1), to define two side portions (25, 35) substantially extending in planes orthogonal to a geometric axis of rotation of the tyre (1) at mutually spaced apart positions in an axial direction, and a crown portion (24, 34) extending in a radially outer position between the side portions (25, 35),
- said crown portions (24, 34) being disposed in side by side relationship along the circumferential extension of the tyre (1), whereas the side portions (25, 35) of each strip-like length (13, 33) are each partly covered with a side portion (25, 35) of at least one adjacent strip-like length,
**characterized in that** each of said inextensible annular structures (4) comprises:
- a first circumferentially inextensible annular insert (27) substantially in the form of a circle ring disposed coaxially with the tyre and adjacent to an inner circumferential edge of the first carcass ply (3), said first annular insert being formed with at least one elongated element extending in concentric coils (27a).

2. A tyre as claimed in claim 1, wherein the side portions (25, 35) of said strip-like lengths (13, 33) mutually converge towards the geometric axis of rotation of the tyre (1).

3. A tyre as claimed in claim 1, wherein covering of the side portions (25, 35) of the strip-like lengths (13, 33) progressively decreases starting from a maximum value at radially inner ends of the side portions until a zero value at transition regions between said side portions (25, 35) and crown portions (24, 34).

4. A tyre as claimed in claim 1, wherein the individual strip-like lengths (13, 33) are disposed on the tyre (1) according to a circumferential distribution pitch corresponding to the width of the strip-like lengths themselves.

5. A tyre as claimed in claim 1, wherein the individual strip-like lengths (13, 33) are disposed on the tyre (1) according to a circumferential distribution pitch corresponding to a multiple of the width of the strip-like lengths.

6. A tyre as claimed in claim 1, wherein each strip-like length (13, 33) has a width corresponding to a submultiple of the circumferential tyre (1) extension, as measured at an equatorial plane thereof.

7. A tyre as claimed in claim 1, wherein the side portions (25, 35) of the strip-like lengths (13, 33) have regions of increased width close to the inner circumferential edges of the carcass structure (2).

8. A tyre as claimed in claim 7, wherein the thread-like elements (14, 32) included in each strip-like length (13, 33) are mutually moved apart at said regions of increased width.

9. A tyre as claimed in claim 1, wherein each of said strip-like lengths (13, 33) has a width included between 3 mm and 20 mm.

10. A tyre as claimed in claim 1, wherein each of said strip-like lengths (13, 33) comprises three to ten thread-like elements (14, 32).

11. A tyre as claimed in claim 1, wherein each of said thread-like elements (14, 32) is made of a textile cord of a diameter included between 0.6 and 1.2 mm.

12. A tyre as claimed in claim 1, wherein each of said thread-like elements (14, 32) is made of a metallic cord of a diameter included between 0.3 mm and 2.1 mm.

13. A tyre as claimed in claim 1, wherein said thread-like elements (14, 32) are disposed in the respective strip-like lengths (13, 33) according to a density greater than six thread-like elements/centimetre, circumferentially measured on the carcass ply (3, 31) close to the equatorial plane (X-X) of the tyre (1).

14. A tyre as claimed in claim 13, wherein said thread-like elements (14, 32) are disposed in the respective strip-like lengths (13, 33) according to a mutual distance between centres not lower than 1.5 times the diameter of the thread-like elements.

15. A tyre as claimed in claim 1, wherein each inextensible annular structure comprises:
- a second circumferentially inextensible annular insert (28) substantially in the form of a crown circle ring disposed coaxially with the tyre at a position axially spaced apart from the first annular insert (27), said second annular insert (28) being formed with at least one elongated element extending in concentric coils (28a);
- a filling body (29) of elastomer material interposed between the first and second annular anchoring elements (27, 28) and intimately joined to the latter.

16. A tyre as claimed in claim 1, wherein said carcass structure (2) further comprises at least one second carcass ply (31) externally applied to the first carcass ply (3).

17. A tyre as claimed in claim 16, wherein the second carcass ply (31) has thread-like elements (32) disposed according to a crossed orientation relative to the thread-like elements (14) of the first carcass ply (3).

18. A tyre as claimed in claim 16, wherein the second carcass ply (31) is made in the same manner as the first carcass ply (3), and has respective strip-like lengths (33) disposed according to a crossed orientation relative to the strip-like lengths (13) of the first carcass ply.

19. A tyre as claimed in claim 17 or 18, wherein the thread-like elements (14, 32) of each of said carcass plies (3, 31) have an orientation inclined at an angle included between 0° and 25° relative to a plane radial to a geometric axis of rotation of the tyre.

20. A tyre as claimed in claim 1, wherein said first annular insert (27) is applied to an outer surface of the first carcass ply (3) in contact relationship therewith.

21. A tyre as claimed in claims 15 and 16, wherein said second circumferentially inextensible annular insert (28) is applied to an inner surface of said second carcass ply (31), in contact relationship therewith.

22. A tyre as claimed in claims 15 and 16, wherein said second circumferentially inextensible annular insert (28) is applied to an outer surface of said second carcass ply (31) in contact relationship therewith, said second carcass ply (31) having inner circumferential portions each interposed between the filling body (29) and the second inextensible annular insert (28) belonging to the respective annular reinforcing structure (4).

23. A tyre as claimed in claim 15, wherein the second circumferentially inextensible annular insert (28) has a radial extension greater than the radial extension of the first circumferentially inextensible annular insert (27).

24. A tyre as claimed in claim 15, wherein said filling body (29) of elastomer material has a hardness included between 70° and 92° Shore A.

25. A tyre as claimed in claim 1, wherein the carcass structure (2) further comprises at least one liner (10) made of an air-proof elastomer material which coats said carcass ply internally of the tyre (1).

26. A tyre as claimed in claim 25, wherein said liner (10) is essentially made of at least one ribbon-like band (12) of an air-proof elastomer material extending in side-by-side coils along the cross section profile of the tyre (1).

## Patentansprüche

1. Reifen für Fahrzeugräder
- mit einem Karkassenaufbau (2), der wenigstens eine Karkassenlage (3, 31) mit fadenförmigen Elementen (14), von denen sich jedes mit einer im wesentlichen Ü-Form um das Querschnittsprofil des Reifens (1) erstreckt, und mit einem Paar von am Umfang nicht dehnbaren ringförmigen Aufbauten (4) aufweist, von denen jeder nahe an einem entsprechenden inneren Umfangsrand der Karkassenlage (3, 31) angreift,
- mit einem Läufflächenband (8), das auf den Karkassenaufbau (2) an einer am Umfang äußeren Position von ihm aufgebracht ist, und
- mit wenigstens einem Paar von Seitenwänden (9), die an dem Karkassenaufbau (2) an seitlich gegenüberliegenden Positionen angebracht sind,
- wobei der wenigstens eine Karkassenaufbau (3, 31),
-- eine Vielzahl von streifenförmigen Längenstücken (13, 33) hat, von denen jedes wenigstens zwei der fadenförmigen Elemente (14, 32) aufweist, die längs und parallel zueinander angeordnet und wenigstens teilweise mit wenigstens einer Schicht aus Rohelastomermaterial (17) überzogen sind,
-- wobei sich jedes der streifenförmigen Längenstücke (13, 33) mit einer im wesentlichen U-Form um das Querschnittsprofil des Reifens (1) erstreckt und zwei Seitenabschnitte (25, 35), die sich im wesentlichen in Ebenen senkrecht zu einer geometrischen Drehachse des Reifens (1) an in Axialrichtung zueinander beabstandeten Positionen erstrecken, sowie einen Kronenabschnitt (24, 34) bildet, der sich in einer radial äußeren Position zwischen den Seitenabschnitten (25, 35) erstreckt, und
-- wobei die Kronenabschnitte (24, 34) in einer Beziehung Seite an Seite längs der Umfangserstreckung des Reifens (1) angeordnet sind, während die Seitenabschnitte (25, 35) von jedem streifenförmigen Längenstück (13, 33) teilweise mit einem Seitenabschnitt (25, 35) wenigstens eines benachbarten streifenförmigen Längenstücks abgedeckt sind,
**dadurch gekennzeichnet,**
- **dass** jeder der nicht dehnbaren ringförmigen Aufbauten (4) eine erste am Umfang nicht dehnbare ringförmige Einlage (27), die im wesentlichen die Form eines Kreisrings hat, der koaxial zum Reifen und angrenzend an einen inneren Umfangsrand der ersten Karkassenlage (3) angeordnet ist, wobei die erste ringförmige Einlage mit wenigstens einem langgestreckten Element versehen ist, das sich in konzentrischen Windungen (27a) erstreckt.

2. Reifen nach Anspruch 1, bei welchem die Seitenabschnitte (25, 35) der streifenförmigen Längenstücke (13, 33) gegenseitig zu der geometrischen Drehachse des Reifens (1) konvergieren.

3. Reifen nach Anspruch 1, bei welchem die Abdeckung der Seitenabschnitte (25, 35) der streifenförmigen Längenstücke (13, 33) ausgehend von einem Maximalwert an den radial inneren Enden der Seitenabschnitte bis zu einem Nullwert an Übergangsbereichen zwischen den Seitenabschnitten (25, 35) und den Kronenabschnitten (24, 34) fortschreitend abnimmt.

4. Reifen nach Anspruch 1, bei welchem die einzelnen streifenförmigen Längenstücke (13, 33) auf dem Reifen (1) mit einer Umfangsverteilungs-Teilung angeordnet sind, die der Breite der streifenförmigen Längenstücke entspricht.

5. Reifen nach Anspruch 1, bei welchem die einzelnen streifenförmigen Längenstücke (13, 33) auf dem Reifen (1) mit einer Umfangsverteilungs-Teilung angeordnet sind, die einem Mehrfachen der Breite der streifenförmigen Längenstücke entspricht.

6. Reifen nach Anspruch 1, bei welchem jedes streifenförmige Längenstück (13, 33) eine Breite hat, die einem in einer Zahl ohne Rest aufgehenden Teiler der Umfangserstreckung des Reifens (1) gemessen in seiner Äquatorialebene entspricht.

7. Reifen nach Anspruch 1, bei welchem die Seitenabschnitte (25, 35) der streifenförmigen Längenstücke (13, 33) Bereiche mit erhöhter Breite nahe an den inneren Umfangsrändern des Karkassenaufbaus (2) haben.

8. Reifen nach Anspruch 7, bei welchem die fadenförmigen Elemente (14, 32), die in jedem streifenförmigen Längenstück (13, 33) eingeschlossen sind, an den Bereichen mit erhöhter Breite gegenseitig voneinander weg bewegt sind.

9. Reifen nach Anspruch 1, bei welchem die streifenförmigen Längenstücke (13, 33) eine Breite zwischen 3 mm und 20 mm haben.

10. Reifen nach Anspruch 1, bei welchem jedes der streifenförmigen Längenstücke (13, 33) drei bis zehn fadenförmige Elemente (14, 32) aufweist.

11. Reifen nach Anspruch 1, bei welchem jedes der fadenförmigen Elemente (14, 32) aus einem Textilkord mit einem Durchmesser zwischen 0,6 und 1,2 mm besteht.

12. Reifen nach Anspruch 1, bei welchem jedes der fadenförmigen Elemente (14, 32) aus einem metallischen Kord mit einem Durchmesser zwischen 0,3 mm und 2,1 mm besteht

13. Reifen nach Anspruch 1, bei welchem die fadenförmigen Elemente (14, 32) in den jeweiligen streifenförmigen Längenstücken (13, 33) mit einer Dichte angeordnet sind, die größer ist als sechs fadenförmige Elemente/Zentimeter gemessen am Umfang auf der Karkassenlage (3, 31) nahe an der Äquatorialebene (X-X) des Reifens (1).

14. Reifen nach Anspruch 13, bei welchem die fadenförmigen Elemente (14, 32) in den jeweiligen streifenförmigen Längenstücken (13, 33) in einem gegenseitigen Abstand zwischen den Mitten von nicht weniger als dem 1,5-fachen des Durchmessers der fadenförmigen Elemente angeordnet sind.

15. Reifen nach Anspruch 1, bei welchem jeder nicht dehnbare ringförmige Aufbau
- eine zweite am Umfang nicht dehnbare ringförmige Einlage (28) aufweist, die im wesentlichen die Form eines Kreisrings hat, der koaxial zum Reifen an einer Position axial im Abstand von der ersten ringförmigen Einlage (27) angeordnet ist, wobei die zweite ringförmige Einlage (28) mit wenigstens einem langgestreckten Element gebildet ist, das sich in konzentrischen Windungen (28a) erstreckt,
- wobei ein Füllkörper (29) aus elastomerem Material zwischen dem ersten und zweiten ringförmigen Verankerungselement (27, 28) angeordnet und mit den letzteren innig verbunden ist.

16. Reifen nach Anspruch 1, bei welchem der Karkassenaufbau (2) weiterhin wenigstens eine zweite Karkassenlage (31) aufweist, die außen auf die erste Karkassenlage (3) aufgebracht ist.

17. Reifen nach Anspruch 16, bei welchem die zweite Karkassenlage (31) fadenförmige Elemente (32) aufweist, die mit einer gekreuzten Ausrichtung bezüglich der fadenförmigen Elemente (14) der ersten Karkassenlage (3) angeordnet sind.

18. Reifen nach Anspruch 16, bei welchem die zweite Karkassenlage (31) genauso wie die erste Karkassenlage (3) hergestellt ist und zwei streifenförmige Längenstücke (33) hat, die mit einer gekreuzten Ausrichtung bezüglich der streifenförmigen Längenstücke (13) der ersten Karkassenalge angeordnet sind.

19. Reifen nach Anspruch 17 oder 18, bei welchem die fadenförmigen Elemente (14, 32) jeder der Karkassenlagen (3, 31) eine Ausrichtung hat, die mit einem Winkel zwischen 0° und 25° bezüglich einer zur geometrischen Drehachse des Reifens radialen Ebene geneigt ist.

20. Reifen nach Anspruch 1, bei welchem die erste ringförmige Einlage (27) auf eine Außenfläche der ersten Karkassenlage (3) in einer Kontaktbeziehung mit ihr aufgebracht ist.

21. Reifen nach den Ansprüchen 15 und 16, bei welchem die zweite am Umfang nicht dehnbare ringförmige Einlage (28) auf eine Innenfläche der zweiten Karkassenlage (31) in einer Kontaktbeziehung mit ihr aufgebracht ist.

22. Reifen nach den Ansprüchen 15 und 16, bei welchem die zweite am Umfang nicht dehnbare ringförmige Einlage (28) auf eine Außenfläche der zweiten Karkassenlage (31) in einer Kontaktbeziehung mit ihr aufgebracht ist, wobei die zweite Karkassenlage (31) innere Umfangsabschnitte hat, von denen jeder zwischen dem Füllkörper (29) und der zweiten nicht dehnbaren ringförmigen Einlage (28) angeordnet ist, die zu dem jeweiligen ringförmigen verstärkenden Aufbau (4) gehört.

23. Reifen nach Anspruch 15, bei welchem die zweite am Umfang nicht dehnbare ringförmige Einlage (28) eine radiale Erstreckung hat, die größer ist als die radiale Erstreckung der ersten am Umfang nicht dehnbaren ringförmigen Einlage (27).

24. Reifen nach Anspruch 15, bei welchem der Füllkörper (29) aus elastomerem Material eine Shore-A-Härte zwischen 70° und 92° hat.

25. Reifen nach Anspruch 1, bei welchem der Karkassenaufbau (2) weiterhin wenigstens eine Auskleidung (10) aus einem luftdichten elastomeren Material aufweist, das die Karkassenlage innerhalb des Reifens (1) überzieht.

26. Reifen nach Anspruch 25, bei welchem die Auskleidung (10) im wesentlichen aus wenigstens einem bandförmigen Streifen (12) aus einem luftdichten elastomeren Material besteht, das sich in nebeneinander befindlichen Windungen längs des Querschnittsprofils des Reifens (1) erstreckt.

## Revendications

1. Pneu pour roues de véhicule comprenant :
- une structure de carcasse (2) comportant au moins une nappe de carcasse (3, 31) comprenant des éléments de type fil (14) s'étendant chacun selon une conformation sensiblement en U autour du profil de la section du pneu (1), et une paire de structures annulaires circonférentiellement inextensibles (4) toutes deux engagées près d'un bord circonférentiel intérieur respectif de la nappe de carcasse (3, 31) ;
- une bande de roulement (8) appliquée à la structure de carcasse (2) en une position circonférentiellement externe de celle-ci ;
- au moins une paire de flancs (9) appliqués à la structure de carcasse (2) en des positions latéralement opposées,
dans lequel ladite au moins une nappe de carcasse (3, 31) comprend :
- une pluralité de longueurs en bande (13, 33) comprenant chacune au moins deux desdits éléments de type fil (14, 32) disposés longitudinalement et parallèlement entre eux et au moins partiellement revêtus d'au moins une couche de matériau élastomère brut (17),
- chacune desdites longueurs en bande (13, 33) s'étendant en une conformation sensiblement en U autour du profil de la section du pneu (1), pour définir deux parties latérales (25, 35) s'étendant sensiblement dans des plans orthogonaux à un axe géométrique de rotation du pneu (1) en des positions mutuellement espacées dans une direction axiale, et une partie de sommet (24, 34) s'étendant en une position radialement extérieure entre les parties latérales (25, 35),
- lesdites parties de sommet (24, 34) étant disposées côte à côte le long de la dimension circonférentielle du pneu (1), tandis que les parties latérales (25, 35) de chaque longueur en bande (13, 33) sont chacune partiellement couverte par une partie latérale (25, 35) d'au moins une longueur en bande adjacente,
**caractérisé en ce que** chacune desdites structures annulaires inextensibles (4) comprend :
- un premier insert annulaire circonférentiellement inextensible (27) sensiblement sous forme d'anneau circulaire disposé coaxialement avec le pneu et adjacent à un bord circonférentiel intérieur de la première nappe de carcasse (3), ledit premier insert annulaire étant muni d'au moins un élément allongé s'étendant en spires concentriques (27a).

2. Pneu selon la revendication 1, dans lequel les parties latérales (25, 35) desdites longueurs en bande (13, 33) convergent mutuellement vers l'axe géométrique de rotation du pneu (1).

3. Pneu selon la revendication 1, dans lequel la couverture des parties latérales (25, 35) des longueurs en bande (13, 33) diminue progressivement à partir d'une valeur maximale aux extrémités radialement intérieures des parties latérales jusqu'à une valeur nulle aux régions de transition entre lesdites parties latérales (25, 35) et lesdites parties de sommet (24, 34).

4. Pneu selon la revendication 1, dans lequel les longueurs en bande individuelles (13, 33) sont disposées sur le pneu (1) selon un pas de répartition circonférentielle qui correspond à la largeur des longueurs en bande.

5. Pneu selon la revendication 1, dans lequel les longueurs en bande individuelles (13, 33) sont disposées sur le pneu (1) selon un pas de répartition circonférentielle qui correspond à un multiple de la largeur des longueurs en bande.

6. Pneu selon la revendication 1, dans lequel chaque longueur en bande (13, 33) a une largeur qui correspond à un sous-multiple de la dimension circonférentielle du pneu (1), mesurée au niveau d'un plan équatorial de ce dernier.

7. Pneu selon la revendication 1, dans lequel les parties latérales (25, 35) des longueurs en bande (13, 33) ont des régions de largeur supérieure prés des bords circonférentiels intérieurs de la structure de carcasse (2).

8. Pneu selon la revendication 7, dans lequel les éléments de type fil (14, 32) compris dans chaque longueur en bande (13, 33) sont mutuellement écartés au niveau desdites régions de largeur supérieure.

9. Pneu selon la revendication 1, dans lequel chacune desdites longueurs en bande (13, 33) a une largeur comprise entre 3 mm et 20 mm.

10. Pneu selon la revendication 1, dans lequel chacune desdites longueurs en bande (13, 33) comprend de trois à dix éléments de type fil (14, 32).

11. Pneu selon la revendication 1, dans lequel chacun desdits éléments de type fil (14, 32) est fait d'un câblé textile présentant un diamètre compris entre 0,6 et 1,2 mm.

12. Pneu selon la revendication 1, dans lequel chacun desdits éléments de type fil (14, 32) est fait d'un câblé métallique présentant un diamètre compris entre 0,3 mm et 2,1 mm.

13. Pneu selon la revendication 1, dans lequel lesdits éléments de type fil (14, 32) sont disposés dans les longueurs en bande (13, 33) respectives avec une densité supérieure à six éléments de type fil par centimètre, mesurée circonférentiellement sur la nappe de carcasse (3, 31) près du plan équatorial (X-X) du pneu (1).

14. Pneu selon la revendication 13, dans lequel lesdits éléments de type fil (14, 32) sont disposés dans les longueurs en bande (13, 33) respectives avec une distance mutuelle entre centres supérieure ou égale à 1,5 fois le diamètre des éléments de type fil.

15. Pneu selon la revendication 1, dans lequel chaque structure annulaire inextensible comprend :
- un deuxième insert annulaire circonférentiellement inextensible (28) sensiblement sous forme d'anneau circulaire disposé coaxialement avec le pneu en une position axialement espacée du premier insert annulaire (27), ledit deuxième insert annulaire (28) étant muni d'au moins un élément allongé s'étendant en spires concentriques (28a) ;
- un corps de remplissage (29) en matériau élastomère intercalé entre les premier et deuxième éléments d'ancrage annulaires (27, 28) et intimement lié à ce dernier.

16. Pneu selon la revendication 1, dans lequel ladite structure de carcasse (2) comprend en outre au moins une deuxième nappe de carcasse (31) appliquée extérieurement à la première nappe de carcasse (3).

17. Pneu selon la revendication 16, dans lequel la deuxième nappe de carcasse (31) comporte des éléments de type fil (32) disposés selon une orientation croisée par rapport aux éléments de type fil (14) de la première nappe de carcasse (3).

18. Pneu selon la revendication 16, dans lequel la deuxième nappe de carcasse (31) est faite de la même manière que la première nappe de carcasse (3), et comporte des longueurs en bande respectives (33) disposées selon une orientation croisée par rapport aux longueurs en bande (13) de la première nappe de carcasse.

19. Pneu selon la revendication 17 ou 18, dans lequel les éléments de type fil (14, 32) de chacune desdites nappes de carcasse (3, 31) ont une orientation inclinée selon un angle compris entre 0° et 25° par rapport à un plan radial à un axe géométrique de rotation du pneu.

20. Pneu selon la revendication 1, dans lequel ledit premier insert annulaire (27) est appliqué à une surface extérieure de la première nappe de carcasse (3) en relation de contact avec celle-ci.

21. Pneu selon les revendications 15 et 16, dans lequel ledit deuxième insert annulaire circonférentiellement inextensible (28) est appliqué à une surface intérieure de ladite deuxième nappe de carcasse (31), en relation de contact avec celle-ci.

22. Pneu selon les revendications 15 et 16, dans lequel ledit deuxième insert annulaire circonférentiellement inextensible (28) est appliqué à une surface extérieure de ladite deuxième nappe de carcasse (31) en relation de contact avec celle-ci, ladite deuxième nappe de carcasse (31) ayant des parties circonférentielles intérieures intercalées chacune entre le corps de remplissage (29) et le deuxième insert annulaire inextensible (28) appartenant à la structure de renfort annulaire respective (4).

23. Pneu selon la revendication 15, dans lequel le deuxième insert annulaire circonférentiellement inextensible (28) a une dimension radiale supérieure à la dimension radiale du premier insert annulaire circonférentiellement inextensible (27).

24. Pneu selon la revendication 15, dans lequel ledit corps de remplissage (29) en matériau élastomère présente une dureté comprise entre 70° et 92° Shore A.

25. Pneu selon la revendication 1, dans lequel la structure de carcasse (2) comprend en outre au moins un revêtement intérieur (10) fait d'un matériau élastomère imperméable à l'air qui recouvre ladite nappe de carcasse à l'intérieur du pneu (1).

26. Pneu selon la revendication 25, dans lequel ledit revêtement intérieur (10) est essentiellement constitué d'une bande en ruban (12) en matériau élastomère imperméable à l'air qui s'étend en spires côte à côte le long du profil de la section du pneu (1).
